**Europäisches Patentamt**

**European Patent Office**

**Office européen des brevets**

(19)

(11) Numéro de publication: **0 013 190 B2**

(12) # NOUVEAU FASCICULE DE BREVET EUROPEEN

(45) Date de publication du nouveau fascicule du brevet:
**17.09.86**

(51) Int. Cl.⁴: **B 62 D 11/18**

(21) Numéro de dépôt: **79400691.6**

(22) Date de dépôt: **28.09.79**

(54) **Groupe propulseur hydraulique pour véhicule à recyclage mécanique de puissance en virage.**

(30) Priorité: **26.12.78 FR 7836290**

(43) Date de publication de la demande:
**09.07.80 Bulletin 80/14**

(45) Mention de la délivrance du brevet:
**28.07.82 Bulletin 82/30**

(45) Mention de la décision concernant l'opposition:
**17.09.86 Bulletin 86/38**

(84) Etats contractants désignés:
**CH DE GB SE**

(56) Documents cités:
**DE - A - 1 929 380**
**DE - A - 2 446 727**
**DE - A - 2 800 487**
**FR - A - 1 113 793**
**FR - A - 2 284 504**
**US - A - 3 426 621**
**US - A - 3 575 066**

(73) Titulaire: **ETAT-FRANCAIS représenté par le DELEGUE GENERAL POUR L'ARMEMENT, Bureau des Brevets et Inventions de la Délégation Générale pour l'Armement 14, rue Saint-Dominique, F-75997 Paris Armées (FR)**

(72) Inventeur: **Grosjean, Christian, 10 rue des Tournebelles, F-49000 Angers (FR)**
Inventeur: **Marchand, Daniel, 3 Quai Gambetta, F-49000 Angers (FR)**
Inventeur: **Morize, Alain, 68 rue Albert Camus, F-49460 Montreuil-Juigne (FR)**

# Description

L'invention concerne le domaine technique des transmissions pour véhicules chenillés ou à roues non directrices et plus particulièrement des transmissions hydrostatiques ou hydromécaniques applicables à des chars de combat ou à des engins de travaux publics.

Dans ce domaine, des réalisations ont déjà été proposées. Ainsi, on a réalisé un véhicule à transmissions hydrostatiques indépendantes assurant la translation par vitesse identique sur les deux chenilles ou sur les deux groupes de roues et la direction par variation de la vitesse des chenilles ou des roues d'un côté par rapport à l'autre.

Ce type de réalisations nécessite une augmentation importante de la puissance apparente des éléments hydrauliques de façon à pouvoir transmettre en virage une puissance suffisante sur la chenille ou la roue nécessitant le plus de couple ou de vitesse, ceci afin d'assurer une bonne mobilité à l'engin.

Ce surdimensionnement grève le poids de la transmission et par la-même diminue le rendement en translation pure, pendant laquelle le surcroît de puissance nécessitant cette augmentation de puissance apparente n'est pas utilisé.

D'autres types de véhicules en particulier des véhicules de travaux publics à vitesse lente de translation, sont équipés d'une boîte de vitesses mécanique et d'une transmission hydrostatique de direction. Le transfert de la puissance en virage se fait alors par voie mécanique, la transmission de translation étant alors mécanique et discontinue.

Ce second type de réalisations, qui présente l'avantage d'un transfert de puissance par voie mécanique d'une chenille sur l'autre en virage, est néanmoins caractérisé par une mobilité inférieure à celle qui pourrait être obtenue par une transmission hydrostatique. On trouve décrit ce type de dispositif notamment dans le brevet US–A–3 426 621 dans lequel on utilise pour la propulsion en translation, une transmission hydrostatique pour les basses vitesses, la combinaison d'une transmission mécanique et d'une transmission hydrostatique pour la gamme de vitesses moyennes et une transmission purement mécanique à couple fractionné pour les rapports élevés, le dispositif incluant une commande de direction hydrostatique pour tous les rapports. En particulier, ce genre de dispositifs provoque une discontinuité de la transmission de puissance en virage, qui est due au passage des vitesses de la boite mécanique. En outre, les engins comportant ce genre de dispositifs ont des rayons de virage qui sont directement fonction de la vitesse engagée, le virage s'effectuant par combinaison d'une vitesse de translation obtenue par une transmission incluant la boîte à vitesses mécanique, et d'un surcroît de vitesse apporté à une chenille par la transmission hydrostatique.

Le brevet US–A–3 575 066 montre lui aussi un groupe propulseur dans lequel la transmission est hydromécanique avec utilisation d'une boîte de vitesse mécanique dans une partie de la gamme de couples, la transmission n'étant que totalement hydrostatique pour le rapport inférieur des vitesses. Ainsi, la puissance n'est pas totalement transmise de façon hydrostatique aux arbres de sortie dans toute la gamme des couples et des vitesses et implique donc l'adjonction de boîte de vitesse mécanique lourde, encombrante et coûteuse. De plus, pour la transmission en virage, le transfert de couple d'un côté à l'autre est effectué par l'intermédiaire d'un système mécanique complexe.

L'invention a pour but de pallier les inconvénients précités en fournissant un dispositif qui permet un transfert de puissance d'une chenille ou d'un groupe de roues à l'autre sans augmenter la puissance apparente des éléments hydrauliques nécessaires au virage et sans introduire de discontinuité dans la transmission de la puissance.

L'invention a également pour but d'améliorer la mobilité du véhicule en ne faisant dépendre les rayons de virage que d'éléments hydrauliques dont on peut assurer une variation continue et sans faire appel à un apport de puissance mécanique.

L'invention a donc pour objet un groupe propulseur pour recycler en virage la puissance d'une roue ou d'une chenille sur l'autre, sur un véhicule lourd possédant au moins une paire de roues motrices non directrices ou de chenilles entraînées par un arbre de sortie solidaire des supports de satellites de deux trains épicycloïdaux de sortie reliés entre eux par un moyen mécanique composé d'un arbre de transmission en prise sur leurs grandes couronnes, groupe entraîné par un générateur de puissance et actionnant les roues ou les chenilles par l'intermédiaire de trains réducteurs à rapport de réduction unique au moyen d'une première transmission hydraulique pour la propulsion en translation et d'au moins une seconde transmission hydraulique pour la propulsion en virage, chaque première et chaque seconde transmission hydraulique de propulsion en translation et de propulsion en virage étant composée d'au moins une pompe à cylindrée variable, dont chaque pompe débite dans au moins un moteur hydraulique, à cylindrée fixe ou variable, chaque première et chaque seconde transmission actionnant respectivement un premier et un second engrenage de chaque trains épicycloïdal de sortie, dont la transmission hydraulique de propulsion en translation entraîne au moyen d'un réducteur à engrenages la grande couronne de chaque train épicycloïdal, caractérisé en ce qu'il comprend une transmission hydraulique de translation comportant une pompe hydraulique à cylindrée variable débitant dans deux moteurs hydrauliques à cylindrée variable disposés en parallèle, et deux transmissions hydrauliques de virage comportant chacune une pompe à cylindrée variable débitant dans un moteur à cylindrée variable.

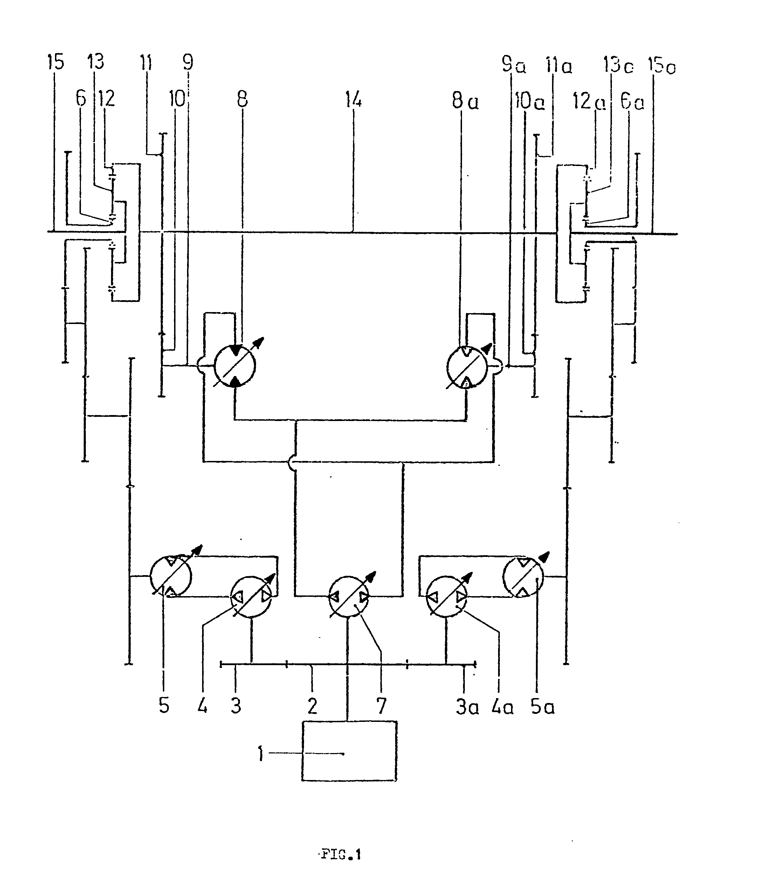

La figure 1 représente schématiquement un mode de réalisation d'un groupe propulseur se-

lon l'invention, comprenant une transmission de translation et deux transmissions indépendantes de rotation, les expressions «transmission de direction», «transmission de rotation», et «transmission de virage» étant employées indifféremment dans la suite du texte.

En regard de la figure 1, le groupe propulseur comprend un générateur de puissance 1, qui peut être un moteur thermique. Celui-ci entraîne les transmissions hydrauliques de translation et de rotation au moyen d'une boîte de répartition comprenant une route menante 2 et deux pignons menés 3 et 3a.

Chacune des deux transmissions hydrauliques de rotation comprend une pompe (respectivement 4a) débitant dans un moteur 5 (5a), ces derniers ainsi que les pompes 4, 4a étant à cylindrée variable. La variation de celle-ci est effectuée par une régulation tachymétrique en fonctionnement en ligne droite, le virage étant obtenu par différence de vitesse des moteurs 5 et 5a.

Les arbres de sortie des moteurs 5 et 5a sont reliés par l'intermédiaire d'un train d'entrenages à la roue centrale 6 (6a) de chaque train épicycloïdal de sortie, connu en soi et représenté schématiquement pour rappel sur la figure 5.

La transmission de translation comprend une pompe à cylindrée variable 7 débitant dans deux moteurs à cylindrée variable 8 et 8a disposés en parallèle dans le circuit de distribution et dont les arbres de sortie 9 et 9a portent chacun une roue menante 10 (10a) qui transmet sa puissance à une roue menée 11, (11a) et par celle-ci à la grande couronne 12 (12a) des trains épicycloïdaux de sortie.

Ces deux grandes couronnes 12 et 12a sont reliés par un arbre de translation 14 qui porte les roues menées 11, 11a et qui assure en virage le recyclage par voie mécanique de la puissance d'une roue ou d'une chenille sur l'autre.

Les satellites 13, 13a de chaque train épicycloïdal sont portés par des arbres portesatellites 15, 15a qui entraînent les roues motrices non directrices ou les barbotins de chenilles du véhicule, non schématisés.

La cylindrée de chacun des éléments hydrauliques à cylindrée variable est commandée de façon connue par une régulation tachymétrique, ce qui permet l'obtention des variations des couples et des vitesses de rotation sur les différents arbres.

Pour le fonctionnement en ligne droite du véhicule, la transmission de translation engendre le couple nécessaire au mouvement du véhicule.

Les pompes 4 et 4a des transmissions de rotation débitent également dans les moteurs 5, 5a et si l'on impose une égalité de débit et des cylindrées, les vitesses de chaque barbotin sont égales et on maintient le véhicule en ligne droite tout en lui apportant un complément de couple et de vitesse dans sa fonction de déplacement en translation.

Pour obtenir un déplacement en rotation du véhicule, on fait varier la vitesse de rotation des moteurs de direction en augmentant la cylindrée de la pompe de rotation côté extérieur et en réduisant celle de la pompe côté intérieur.

Ainsi dans le cas d'un virage à gauche on augmente la vitesse du planétaire 6a extérieur au virage et pour cela, on augmente la vitesse de rotation du moteur 5a par augmentation de débit de fluide (et donc de la cylindrée de la pompe 4a) et/ou par diminution de la cylindrée du moteur 5a.

En outre, on diminue la vitesse du train épicycloïdal intérieur (gauche). Pour cela on diminue le débit de fluide dans la transmission de rotation gauche, intérieure au virage (par diminution de la cylindrée de la pompe 4 et/ou par augmentation de la cylindrée du moteur 5).

De cette façon le planétaire 6 (6a) de chaque train épicycloïdal devient menant et la puissance de virage est transmise à la route où à la chenille droite extérieure au virage, d'une part directement par le train épicycloïdal 6a, 12a, 13a extérieur au virage et d'autre part, par recyclage d'une partie de la puissance transmise à la roue ou à la chenille intérieure par le planétaire 6 menant, au moyen de satellite 13 dont la vitesse propre de rotation est élevée (celle de l'arbre porte-satellite 15 étant faible), au moyen de la grande couronne 12 et de l'arbre de transmission 14.

Les composants hydrauliques servent également au recyclage dans la limite de leur capacité et ne nécessitent pas d'être surdimensionnés.

La puissance disponible sur la route intérieure au virage peut donc être utilisée la roue extérieure nécessitant une puissance supérieure à celle utilisée par la route intérieure.

On obtenient en translation la vitesse maximale lorsque les pompes 17, 17a sont à cylindrée maximale (pour obtenir un débit maximal) et lorsque les moteurs hydrauliques 16, 16a sont à la cylindrée la plus faible compatible avec la conservation d'un rendement correct.

Le couple maximal sera atteint lorsque les cylindrées des moteurs 17, 16a seront maximales ainsi que les pressions dans le circuit d'alimentation. Les pompes 17, 17a seront alors à cylindrée réduite de façon à adapter le couple disponible du moteur thermique au couple absorbé par les pompes, ce qui nécessite l'asservissement tachymétrique des cylindrées des pompes 17, 17a et des moteurs au régime du moteur thermique.

En fonctionnement en virage, le rayon de braquage de l'engin sera fonction de la vitesse de celui-ci, tous les rayons pouvant être obtenus continuement depuis le rayon nul pour le braquage sur place à vitesse de translation nulle, jusqu'au rayon maximal obtenu pour la vitesse maximale de translation, la vitesse de virage de l'engin étant la combinaison de sa vitesse de translation obtenue par sa transmission de translation, et de sa vitesse de rotation données par la transmission de direction.

Ainsi, pour un char de combat ayant une puissance maximale utile sur les barbotins de 490 kilowatts, le rayon de braquage du char serait théoriquement de 13,5 m pour une vitesse de 70 km/h avec une variation continue depuis un rayon nul (bloquage sur place) à vitesse de translation nulle.

On peut remarquer qu'il est possible de diminuer le rayon de braquage du véhicule en ralentissant sa vitesse avant d'aborder le virage ce qui ne fait pas chuter de beaucoup la vitesse du moteur thermique grâce aux régulations sur les éléments hydrauliques.

On voit que dans le dispositif selon l'invention, la transmission de puissance est continue quel que soit le rayon de virage, celui-ci étant directement fonction de la vitesse du véhicule. La mobilité de ce dernier est alors sensiblement améliorée.

L'invention est applicable avantageusement à tous les véhicules à chenilles ou à roues nécessitant une mobilité importante et une grande puissance de virage et pour lesquels la masse doit être impérativement limitée.

## Revendication

Groupe propulseur hydraulique pur pour recycler en virage la puissance d'une roue ou d'une chenille sur l'autre, sur un véhicule lourd possédant au moins une paire de roues motrices non directrices ou de chenilles entraînées par un arbre de sortie (15, 15a) solidaire des supports de satellites (13, 13a) de deux trains épicycloïdaux de sortie reliés entre eux par un moyen mécanique composé d'un arbre de transmission (14) en prise sur leurs grandes couronnes (12, 12a), groupe entraîné par un générateur de puissance (1) et actionnant les roues ou les chenilles par l'intermédiaire de trains réducteurs à rapport de réduction unique au moyen d'une première transmission hydraulique pour la propulsion en translation (7, 8, 8a) et d'au moins une seconde transmission hydraulique pour la propulsion en virage (4, 5, 4a, 5a), chaque première et chaque seconde transmission hydraulique de propulsion en translation et de propulsion en virage étant composée d'au moins une pompe à cylindrée variable (4, 4a, 7), dont chaque pompe débite dans au moins un moteur hydraulique (5, 5a, 8, 8a) à cylindrée fixe ou variable, chaque première et chaque seconde transmission actionnant respectivement un premier et un second engrenage de chaque train épicycloïdal de sortie, dont la transmission hydraulique de propulsion en translation entraîne au moyen d'un réducteur à engrenages la grande couronne (12, 12a) de chaque train épicycloïdal, groupe propulseur caractérisé en ce qu'il comprend une transmission hydraulique de translation comportant une pompe hydraulique à cylindrée variable (7) débitant dans deux moteurs hydrauliques à cylindrée variable (8, 8a) disposés en parallèle, et deux transmissions hydrauliques de virage comportant chacune une pompe à cylindrée variable (3, 3a) débitant dans un moteur à cylindrée variable (5, 5a).

## Patentanspruch

Reine hydraulische Antriebsgruppe, mit der in einer Kurve die Leistung eines Rades oder einer Raupe auf dem anderen übertragen wird, an einem schweren Fahrzeug, das mindestens ein Paar nicht lenkende Antriebsräder oder Raupen aufweist, die von einer Ausgangswelle (15, 15a) angetrieben werden, die mit den Satellitenträgern (13, 13a) der beiden epizykloidischen Ausgangswerke fest verbunden ist, die ihrerseits durch ein mechanisches Mittel miteinander verbunden sind, das aus einer Übertragungswelle (14) besteht, die in die grossen Zahnkränze (12, 12a) eingreifen, und einen Leistungsgenerator (1) umfasst, der die Räder oder die Raupen über Getrieberäder mit einzigem Reduktionsverhältnis Zahnräder antreibt, wobei eine erste hydraulische Übertragung für die Schiebbewegung (7, 8, 8a) und mindestens eine zweite hydraulische Übertragung für die Kurvenbewegung (4, 5, 4a) vorgesehen ist, wobei jede erste und jede zweite hydraulische Übertragung für die Schiebbewegung oder die Kurvenbewegung aus mindestens einer Pumpe (4, 4a, 7) mit veränderlichem Hubraum bestehen, jede Pumpe mindestens einen Hydraulikmotor (5, 5a, 8, 8a) mit feststehendem oder veränderlichem Hubraum beaufschlagt, während jede erste und jede zweite Übertragung jeweils ein erstes und ein zweites Getriebe für jedes epizykloidale Ausgangswerk antreiben, die hydraulische Übertragung für die Schiebbewegung über ein Getriebe mit Zahnrädern den grossen Zahnkranz (12, 12a) jedes epizykloidischen Werkes antreibt, Antriebsgruppe dadurch gekennzeichnet, dass sie eine hydraulische Übertragung für die Schiebbewegung aufweist, die eine hydraulische Pumpe (7) mit veränderlichem Hubraum umfasst, die zwei Hydraulikmotoren (8, 8a) mit veränderlichem Hubraum beaufschlagt, die parallel zueinander angeordnet sind, und zwei hydraulische Übertragungen für die Kurvenbewegung, die jede eine Pumpe mit veränderlichem Hubraum (3, 3a) umfassen, die einen Motor (5, 5a) mit veränderlichem Hubraum beaufschlagen.

## Claim

Pure hydraulic propulsion unit designated to recycle, on turning, the power of a wheel or crawler on the other, on a heavy vehicle with at least one pair of non-steering drivewheels crawlers driven by an output shaft (15, 15a) integral with the planet gear supports (13, 13a) of two epicyclic output trains interconnected by a mechanical means consisting of a drive shaft (14) meshing onto their large crown gears (12, 12a), unit driven by a power generator (1) and actuating the wheels or crawlers via reducer trains with single reducing ratio by one initial hydraulic transmission for the travel drive propulsion (7, 8, 8a) and at least one second hydraulic transmission for turning propulsion (4, 5, 4a, 5a), each first and second hydraulic travel drive or turning transmission consisting of at least one pump of variable cubic capacity (4, 4a, 7), each pump delivering to at least hydraulic motor (5, 5a, 8, 8a) with variable or fixed cubic capacity, each first and second transmission respectively actuating a first and second gear in each epicyclic output train, the hydraulic travel drive transmission driving via a gear reducer, the large crown gear (12, 12a) of each epicyclic train, propulsion unit characterized in that it contains a hydraulic travel drive transmission comprising a hydraulic pump of variable cubic capacity (7) delivering to two hydraulic motors of variable cubic capacity (8, 8a), installed parallel, and two hydraulic turning transmissions, each transmission comprising a pump of variable cubic capacity (3, 3a), and delivering to one motor of variable cubic capacity (5, 5a).

0 013 190

·FIG.1

7